# EUROPÄISCHE PATENTSCHRIFT

(11) **EP 2 716 829 B1**
(45) Veröffentlichungstag und Bekanntmachung des Hinweises auf die Patenterteilung: **16.11.2016**
(21) Anmeldenummer: 13182694.3
(22) Anmeldetag: 02.09.2013
(51) Int. Cl.: E04B 1/76, H02G 3/12

(54) **Geräteträger**
Device holder
Support d'appareil

(30) Priorität: 04.10.2012 CH 18612012
(43) Veröffentlichungstag der Anmeldung: 09.04.2014
(73) Patentinhaber: Agro AG, 5502 Hunzenschwil (CH)
(72) Erfinder: Brunner, Fabian, 4656 Starrkirch-Wil (CH)
(74) Vertreter: Rentsch Partner AG

(56) Entgegenhaltungen:
- EP-A2- 0 710 751
- CH-A2- 703 418
- CH-B1- 702 238
- Kaiser-Elektro: "Installation ohne Wärmebrücken", , 22. Februar 2011 (2011-02-22), Seiten 1-20, XP055097545, Deutschland Gefunden im Internet: URL:http://www.siblik.com/neuheiten/doku/k aiser_enev_isolation_2010.pdf [gefunden am 2014-01-21]

## Beschreibung

### TECHNISCHES GEBIET

Die Erfindung betrifft Geräteträger zur Befestigung von Geräten insbesondere an einem aussen isolierten Bauwerk.

### STAND DER TECHNIK

Aus ökologischen wie auch ökonomischen Gründen kommt der thermischen Isolierung beim Neubau oder der Sanierung von Bauwerken eine immer wichtiger werdende Rolle zu. Beispielsweise schreiben moderne Energiestandards für Gebäude im Vergleich zu früher bedeutend dickere Schichten von thermischen Aussendämmungen vor. Die meisten dabei eingesetzten Dämmwerkstoffe verfügen jedoch über eine nur sehr geringe Tragfähigkeit, weshalb sie nur sehr beschränkt mechanisch belastet werden können. Dies erschwert insbesondere das Anbringen von Geräten (z.B. Lampen, Schalter, Sensoren) im Bereich der äusseren Oberfläche dieser Dämmschichten. Im Stand der Technik sind Geräteträger zur Befestigung von Geräten an einer zu isolierenden Bauwerkoberfläche bekannt.

EP 0 710 751 offenbart einen Geräteträger nach dem Oberbegriff des Anspruchs 1.

EP0710751B1 wurde am 23.10.1995 im Namen der Anmelderin eingereicht und beschreibt einen Geräteträger mit plattenförmigem Basiselement und prismatischem stufenlos teleskopierbarem Träger einer Befestigungsplatte, mit welchem Dämmschichten unterschiedlicher Dicken erfolgreich überbrückt werden können.

EP1422800B1 wurde am 25.22.2002 ebenfalls im Namen der Anmelderin eingereicht und beschreibt einen Geräteträger zur Befestigung von Geräten auf einer aussen oder innen gedämmten Gebäudemauer oder Gebäudedecke. Der Geräteträger umfasst ein Grundelement, das an einem Mauerwerk befestigt werden kann, einen Träger in Form eines rahmenförmigen Aufbauelements und einer Montageplatte zur Aufnahme eines Geräts. In einer Ausführungsform ist das Aufbauelement auf das Basiselement aufrastbar, weist trennbare Segmente auf und ist dadurch in seiner Höhe veränderbar. Ein erfindungsgemässer Geräteträger kann durch Füllen des Trägerinnenbereichs wärmegedämmt werden.

EP0758042A1 wurde am 31.07.1996 im Namen der Anmelderin eingereicht und beschreibt eine verlorene Montagehilfe zum Anbringen einer Unterputzdose, insbesondere für den Betonbau. Die beschriebene Montagehilfe umfasst einen Fuss, eine Montageplatte und ein diese beiden Teile verbindendes Distanzhalteelement. Das Distanzhalteelement beinhaltet eine Teleskopiereinrichtung. Mit dieser kann der Abstand zwischen Fuss und Montageplatte so eingestellt werden, dass die Gesamthöhe der Montagehilfe dem Abstand der zueinander verspannten Schalungsbretter entspricht, wobei eine Kraft der Verringerung der Gesamthöhe entgegenwirkt.

Weitere Geräteträger sind bekannt aus:

KR100766380B1 wurde am 06.09.2005 im Namen von Kim Geun Soo eingereicht und beschreibt eine Anschlussbox für Wände mit Wärmedämmung. Das Dokument zeigt einen Geräteträger, dessen Hauptteil im strukturell tragenden Teil der Wand eingebettet wird und der über einen rohr- oder kastenförmigen Faltenbalg mit der Fassadenoberfläche verbunden ist. Der Faltenbalg ermöglicht eine Anpassung des Geräteträgers zur Überbrückung von Dämmschichten unterschiedlicher Dicken, kann jedoch nur beschränkt zur Übertragung von Lasten verwendet werden.

KR20120026904A wurde am 10.09.2010 im Namen von Kim Geun Soo eingereicht und beschreibt eine Anschlussbox für Wände mit Wärmedämmung. Das Dokument zeigt einen Geräteträger, dessen Hauptteil im strukturell tragenden Teil der Wand eingebettet wird und der über eine kastenförmige Teleskopiereinrichtung mit der Fassadenoberfläche verbunden ist. Die Teleskopiereinrichtung ermöglicht eine Anpassung des Geräteträgers auf Dämmschichten unterschiedlicher Dicken. Gehalten wird eine Dickeneinstellung mittels ineinandergreifender Sägezähne.

EP2254212A2 wurde am 06.05.2010 im Namen von Robert Blaser eingereicht und beschreibt einen Geräteträger für Befestigungen an einer thermisch zu isolierender Bauwerksoberfläche. Der beanspruchte Geräteträger besteht aus einem äusseren Trägerelement, einem inneren Trägerelement und einem Hohlkörper. Das äussere Trägerelement besteht aus demselben Isoliermaterial wie die Dämmung der Bauwerksoberfläche. Das innere Trägerelement besteht aus einem Isoliermaterial mit im Vergleich zum äusseren Trägerelement höherer Festigkeit. Der Hohlkörper besteht aus einem Kunststoff und soll erfindungsgemäss vom inneren Trägerelement lückenlos umschlossen werden. In einer Ausführungsform ist die Verwendung von Ankerbolzen, welche das innere Trägerelement gegen die Bauwerkoberfläche verspannen vorgesehen.

CH704158A2 wurde am 18.11.2010 im Namen von Robert Blaser eingereicht und beschreibt eine Gehäusewanne für den Einbau eines elektrischen oder elektronischen Geräts im Aussenbereich eines Gebäudes. Die Gehäusewanne wird von einem Kabelrohr durchdrungen, mit dem es teilweise stoffschlüssig verbunden ist und das in einen Aufnahmeraum der Gehäusewanne mündet. In einer Ausführungsform verfügt die Gehäusewanne zudem über einen Dichtkörper, der das Kabelrohr gegenüber dem Aufnahmeraum abdichtet. Auf diese Weise sollen ein Luftaustausch zwischen der Wandaussenseite und der Wandinnenseite verhindert und somit Kondensationsprozesse reduziert werden.

EP2367251A2 wurde am 08.03.2011 im Namen von Christoph Morach eingereicht und beschreibt einen Träger für Elektroinstallationen. Der Träger verfügt über einen auf einer Wand montierten Sockel mit einem Führungsrohr und einem Rohränschluss zum seitlichen Einführen von Elektrokabeln. Seitlich am Sockel eingeführte Kabel werden über einen Rohrbogen in das Führungsrohr umgeleitet. Ein Aufsatz zur Aufnahme oder Befestigung eines Geräts kann mittels einer Aufstecköffnung auf das Führungsrohr aufgesetzt werden. Durch Verschieben des Führungsrohrs in der Aufstecköffnung kann die Distanz zwischen Aufsatz und Sockel verändert werden. Auf diese Weise können Dämmschichten unterschiedlicher Dicke überbrückt werden.

### DARSTELLUNG DER ERFINDUNG

Aus dem Stand der Technik sind Träger (Geräteträger) zur Anbringung von Geräten an oder in zu isolierenden Bauwerkoberflächen und zur Überbrückung einer Baudämmschicht bekannt. Diese bekannten Geräteträger erlauben jedoch entweder nur die Anbringung kleiner äusserer Lasten oder sie erfordern eine präzise und zeitaufwendige Montage und Abstützung auf der Bauwerkoberfläche, sowie Anpassung an die Dicke der Baudämmung. Häufig begünstigen sie die Entstehung von Wärmebrücken, was sich negativ auf die Energieeffizienz auswirkt.

Der Erfindung liegt die Aufgabe zugrunde, einen Geräteträger zur Verfügung zu stellen, welcher die oben genannten Nachteile des Standes der Technik vermeidet.

Diese Aufgabe wird durch die Merkmale der Ansprüche 1 und 12 gelöst.

Ein Ziel der Erfindung besteht darin einen Geräteträger zu zeigen, der trotz geringem Gewicht und guten Isolationswerten, hohe Lasten tragen kann; ohne dass dadurch eine Überbelastung und Beschädigung der Baudämmschicht entsteht. Dies wird unter anderem durch das Zusammenspiel von Materialien und optimierten Lastpfaden erreicht.

Ein Vorteil des erfindungsgemässen Geräteträgers besteht darin, dass er auf relativ einfache Art und Weise an Dämmschichten unterschiedlicher Dicken adaptiert werden kann. Gleichzeitig ist er so ausgeprägt, dass er einerseits selber nicht als Wärmebrücke wirkt und andererseits auch die Wärmedämmung in seiner unmittelbaren Umgebung nicht negativ beeinflusst.

In einer Ausführungsform umfasst ein erfindungsgemässer Geräteträger ein Haltemittel, an (ausserhalb) oder in (innerhalb) dem ein oder mehrere Geräte befestigt werden können. Das Haltemittel kann ein- oder mehrteilig aufgebaut sein und ist im montierten Zustand im äusseren Bereich der Bauwerkisolation angeordnet. Die Teile des Haltemittels sind vorteilhafterweise zur Übertragung der Lasten mechanisch wirkverbunden. Zur Überbrückung der Distanz zwischen dem Haltemittel und der zu isolierenden Bauwerkoberfläche werden ein oder mehrere Distanzelemente verwendet, die einzeln oder kombiniert miteinander zwischen dem Haltemittel und der Bauwerkoberfläche angeordnet bzw. eingeklemmt sind.

In einer Ausführungsform wird das Haltemittel mittels einem oder mehrerer Verankerungselemente direkt mechanisch mit der Bauwerkoberfläche wirkverbunden. Die Verankerungselemente dienen als Wirkverbindungsmittel zwischen dem Haltemittel und der Bauwerksoberfläche. In der Regel ist das mindestens eine Verankerungselement im Innern des mindestens einen Distanzelements verlaufend angeordnet, bzw. durchstossen dieses. Durch die Verankerungselemente werden die Distanzelemente zwischen dem Haltemittel und der Bauwerksoberfläche fest eingespannt und bilden eine stabile und dauerhafte Verbindung, welche zur Aufnahme hoher Lasten geeignet ist. Auf diese Art und Weise kann die von einem angebrachten Gerät ausgeübte Last optimal vom Haltemittel auf das Bauwerk übertragen werden. Durch diesen direkten Lastpfad wird eine Überbelastung der umliegenden Baudämmschicht vermieden.

In einer Ausführungsform der Erfindung besteht mindestens ein Distanzelement ganz oder teilweise aus einem selbsttragenden Hartschaum. Das Distanzelement kann aus mehreren unterschiedlichen isolierenden Materialien bestehen. Insbesondere kann das Distanzelement aus einem äusseren Rahmen aus einem Hartschaum mit hoher Festigkeit und Steifigkeit, sowie einem inneren Kern aus einem Hartschaum niedrigerer Festigkeit und Steifigkeit bestehen. Ebenso können in einem Distanzelement nur mit Luft gefüllte Ausnehmungen bzw. Kammern enthalten sein. Alternativ oder in Ergänzung können im Distanzelement strukturtragende Elemente wie Rahmen, Rippen und/oder Säulen angeordnet sein, welche die zu übertragenden Kräfte und Lasten teilweise oder gänzlich übernehmen und eine weitere Wirkverbindung zwischen dem Haltemittel und der Bauwerksoberfläche herstellen. In diesem Fall kann ein weicheres Isolationsmaterial verwendet werden. Bei Vorhandensein mehrerer Distanzelemente können sich diese voneinander nicht nur in ihrer Dicke, sondern auch in ihrer inneren Architektur und den eingesetzten Materialien unterscheiden.

In einer Ausführungsform der Erfindung ist das Wirkverbindungsmittel ein Schlagdübel, der in einer in der Bauwerkoberfläche eingelassenen Bohrung verankert wird. Dies ist vorteilhaft, da Schlagdübel eine einfache und schnell herstellbare Art der Verankerung erlauben und bereits für die Verankerung der umliegenden Baudämmschicht eine grosse Akzeptanz geniessen. Durch die Verwendung eines Schlagdübels mit einem Kunststoffdorn kann zudem der Entstehung von negativen Wärmebrücken vorgebeugt werden. Die Schlagdübel können faserverstärkten Kunststoff aufweisen.

In einer Ausführungsform wird erst ein Grundelement des Geräteträgers auf dem Mauerwerk, beispielsweise mittels einer Verschraubung, befestigt. Anschliessend werden auf dem Grundelement ein oder mehrere Distanzelemente zur Überbrückung der Dicke der Dämmschicht angebracht. Die Wirkverbindung erfolgt in einer Ausführungsform mittels Zapfen und darauf abgestimmter Löcher, in welche die Zapfen eingreifen. Die Wirkverbindungselemente können als Schnappelemente ausgestaltet sein. Die Distanzelemente können aus einem strukturtragenden Gerüst aus steifem Material (z.B. Kunststoff) bestehen, welches auch Kabelkanäle vom Mauerwerk hin zur Fassadenoberfläche aufweisen kann. In einer Ausführungsform sind die strukturtragenden Gerüste im Innern zumindest bereichsweise mit einem isolierenden Material, z.B. PUR-Schaum oder Steinwolle oder einem anderen Isolationsmaterial ausgefüllt oder ausgeschäumt. Alternativ oder in Ergänzung werden nicht benötigte Hohlräume erst nach Erreichen der benötigten Aufstockhöhe mit Dämmmaterial aufgefüllt oder ausgeschäumt. Anschliessend wird der Geräteträger durch das Aufstecken eines Frontrahmens und eines Fronteinsatzes abgeschlossen, welche als Haltemittel dienen.

Eine Ausführungsform der Erfindung umfasst einen Geräteträger zur Befestigung von Geräten an einer mit Isolationsmaterial bedeckten Bauwerkoberfläche. Der Geräteträger umfassend ein Haltemittel und wenigstens ein zwischen dem Haltemittel und der Bauwerkoberfläche liegendes Distanzelement. Im montierten Zustand ist das Haltemittel durch wenigstens ein mechanisches Wirkverbindungsmittel durch das Distanzelement hindurch mit der zu isolierenden Bauwerkoberfläche wirkverbunden. Das Haltemittel kann eine Trägerplatte und/oder eine Trägerschale umfassen. Die Trägerplatte kann mit der Trägerschale wirkverbunden sein und mit dieser eine tragende Einheit bilden. Diese Wirkverbindung kann beispielsweise eine Schnappverbindung und/oder eine Verschraubung und/oder eine Bajonnetverbindung sein. Je nach Ausführungsform wirkt das mindestens eine Wirkverbindungsmittel mit der Trägerschale und/oder der Trägerplatte zusammen. Die Trägerplatte kann mit der Trägerschale über eine oder mehrere Schnappverbindungen und/oder Schraubverbindungen lösbar oder unlösbar mechanisch wirkverbunden sein. Je nach Ausgestaltung ist die Trägerplatte in einer oder mehreren Positionen mit der Trägerschale wirkverbindbar und kann zudem zum Einstellen des Abstandes und/oder des Winkels zwischen der Bauteiloberfläche und der Trägerplatte dienen. Das Distanzelement kann zumindest bereichsweise ein- oder mehrschichtig aus wärmedämmendem Material bestehen. Das wenigstens eine mechanische Wirkverbindungsmittel kann ein Ankerbolzen und/oder ein Reaktionsanker und/oder ein Schlagdübel und/oder eine Schraube und/oder eine Schnappverbindung sein. Das mindestens eine Distanzelement kann eine Rahmenstruktur und/oder ein inneres Gerüst aufweisen, welche zur mechanischen Kraftübertragung zwischen dem Haltemittel und der Bauwerkoberfläche dienen. Das mindestens eine Distanzelement kann bei Bedarf über einen Kabelkanalabschnitt verfügen, welcher im montierten Zustand einen Kabelkanal bildet, der in die Trägerschale, respektive die Trägerplatte mündet und zur Aufnahme von Kabeln dient. Das Hältemittel, respektive das mindestens eine Distanzelement können über Zentriermittel verfügen, die im zusammengesetzten Zustand relative Verschiebungen, respektive Rotationen zwischen dem Haltemittel und den Distanzelementen verhindern. Bei den Zentriermitteln kann es sich um Zapfen und korrespondierend ausgebildete Löcher handeln. Der Geräteträger kann ein Grundelement aufweisen, welches im Bereich der Bauwerksoberfläche angeordnet ist. Das Grundelement kann ein Umlenkelement umfassen, welches an diesem ausgebildet oder als separates Teil in dieses eingesetzt ist. Das Umlenkelement dient zum Umlenken von Kabeln. Das Grundelement kann auf der Bauwerkoberfläche festgeschraubt und/oder in diese form- und/oder stoffschlüssig eingelassen sein. Das Umlenkelement kann in einer Ausführungsform als Führungselement für Kabel und/oder Kabelschutzschläuche dienen. Ein solches Umlenk- oder Führungselement kann in einer Ausführungsform mit einem Verankerungselement eine lösbare Wirkverbindung eingehen.

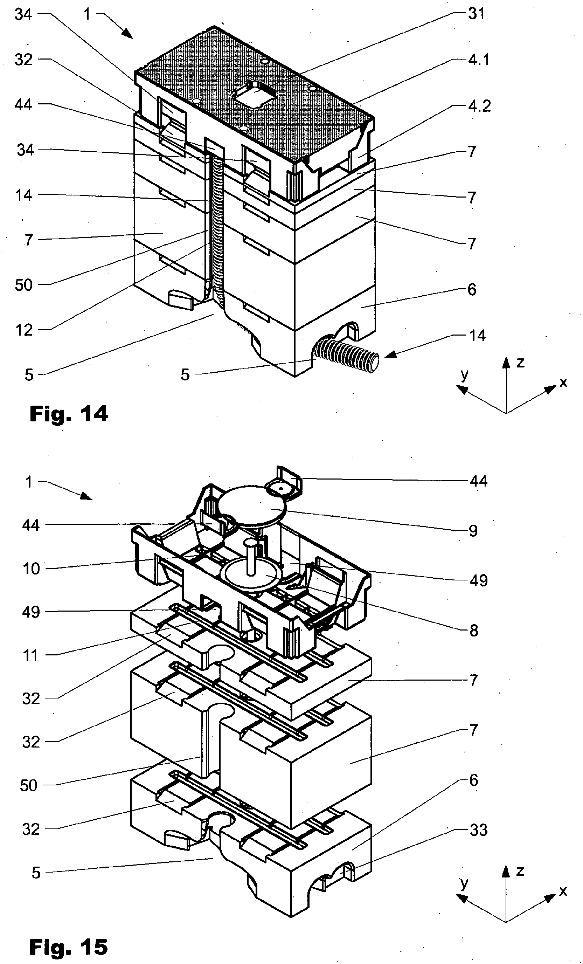

Bei einem Geräteträger kann die Trägerplatte auch wenigstens eine heraustrennbare Teilplatte aufweisen, mittels derer eine Plattenöffnung erzeugt oder vergrössert werden kann (vgl. hierzu auch die Ausführungsvariante gemäss den Figuren 14 und 15, 23 bis 25 und die dazugehörige Beschreibung). Dadurch können beispielsweise unterschiedliche Arten von Geräten aufgenommen werden. Zum einfacheren Heraustrennen der Teilplatten kann eine solche Trägerplatte beispielsweise Trennfugen mit einer dünneren Wandstärke oder Perforierungen aufweisen. In einer bevorzugten Ausführungsform einer solchen Trägerplatte können zwei heraustrennbare Teilplatten seitlich an eine im Wesentlichen zentralen Öffnung angeordnet sein. Nach dem Heraustrennen einer Teilplatte kann so beispielsweise eine Zweifachsteckdose montiert werden, bzw. nach dem Heraustrennen beider Teilplatten eine Dreifachsteckdose. Die beim Heraustrennen der Teilplatten entstehenden Öffnungen können gleiche oder unterschiedliche Abmessungen wie die zentrale Öffnung aufweisen. In einer bevorzugten Ausführungsform einer solchen Trägerplatte weisen die beiden erzeugbaren Öffnungen jeweils einen grösseren Durchmesser als die zentrale Öffnung auf, so dass diese zur Montage eines oder zweier grösseren Geräte (etwa strahlwassergeschützte Steckdosen) verwendet werden können. Das Konzept einer solchen Trägerplatte separat und/oder in Verbindung mit einer Trägerschale kann jedoch auch getrennt von einem Geräteträger als Konzept einer eigenen Erfindung betrachtet werden. Eine solche Trägerplatte eignes sich auch zur Verwendung mit mit Abzweigdosen, Einlasskasten, Unterputzdosen oder anderen Einbaugehäusen zum Beispiel im Betonbau oder bei Hohlwänden verwendet werden. Eine Trägerplatte mit wenigstens einer heraustrennbarere Teilplatte, allein oder in Verbindung mit einer Trägerschale, kann deshalb als eigenes erfinderisches Konzept betrachtet werden. Die Trägerschale kann seitlich oder an der Rückwand Kabeleinführungen aufweisen. Weiterhin kann die Trägerschale Befestigungsmittel aufweisen, mittels denen sie z.B. im Fall einer Unterputzdose an der Armierung eines Baukörpers befestigt werden kann.

In einigen Ausführungsformen der Erfindung kann ein Grundelement auch ein Distanzelement sein, bzw. ein Distanzelement kann in einigen Ausführungsformen der Erfindung als Grundelement verwendet werden.

Eine Ausführungsform eines Geräteträgers weist eine rechteckiges oder zylindrisches Distanzelement auf, welches eine oder mehrere im Wesentlichen senkrecht verlaufende Seitenflächen aufweist (vgl. hierzu die Ausführungsvariante gemäss den Figuren 14 bis 19 und die dazugehörige Beschreibung). Diese weisen einen oder mehrere Kabelkanalabschnitte auf, die am Rand des Distanzelements angrenzend an eine Seitenfläche angeordnet sind. Der mindestens eine Kabelkanalabschnitt bildet eine Art Einbuchtung und ist seitlich von aussen her zugänglich. Ein resultierender Kabelkanal erstreckt sich im Wesentlichen senkrecht zur Bauwerkoberfläche stehend. Jedoch ist es auch möglich, dass wenigstens einzelne Kanalabschnitte in andere Richtungen verlaufen. So ist es etwa denkbar, dass ein Kanalabschnitt eines Distanzelements von einer Seitenfläche des Distanzelements ins innere des Distanzelements hineinführt und auf der Ober- und/oder Unterseite des Distanzelements mündet. Ebenso kann ein Distanzelement aus mehreren Teilen aufgebaut sein, die angrenzend an ihre Seitenflächen über einen Kabelkanalabschnitt verfügen oder welche im zusammengesetzten Zustand im Bereich gemeinsam einen Kabelkanalabschnitt definieren. Ein aus einem oder mehrerer solcher Distanzelemente gebildeter Kabelkanal hat den Vorteil, dass er eine seitliches Einführen oder Entnehmen eines Kabels und/oder Kabelschutzschlauches ermöglicht. Dies ermöglicht gegenüber eingeschlossenen Kabelkanälen den Vorteil, dass ein Kabel oder Kabelschutzschlauch schnell seitlich in den Kanal eingelegt werden kann und nicht axial im Kanal vorgeschoben werden muss. Dies ermöglicht eine gegenüber dem Stand der Technik deutlich vereinfachte Montage des Geräteträgers. Ein Verfahren zur Montage eines solchen Geräteträgers kann so darin bestehen, dass der Geräteträger an der gewünschten Stelle auf einer Bauwerkoberfläche platziert wird und anschliessend ein Kabelschutzschlauch seitlich in den Kabelkanal eingebracht wird. Vorteilhaft daran ist auch, dass etwa ein Kabelschutzschlauch nicht aus der Ebene der Bauwerkoberfläche mittels eines zusätzlichen Führungselements in einen Kabelkanal umgelenkt werden muss, sondern diese Umlenkung ohne weitere Hilfsmittel-von-Hand ausgeführt werden kann. Trotzdem können solche Umlenkelemente in einigen Ausführungsformen der Erfindung vorhanden sein. In einigen Ausführungsformen der Erfindung können Distanzelemente sowohl an die Seitenflächen angrenzende Kanalabschnitte als auch'zentrale (im Innern liegende) Kabelabschnitte aufweisen.

Mit anderen Worten beschrieben kann ein Geräteträger auch einen Kabelkanalabschnitt aufweisen der so angeordnet ist, dass er wenigstens auf einem Teilabschnitt über eine seitliche Öffnung von einer Seitenfläche des betreffenden Distanzelements her zugänglich ist.

Ein an eine Seitenfläche eines Distanzelements angrenzender und in diesen übergehender Kabelkanalabschnitt kann vorteilhafter Weise so ausgebildet sein, dass die Öffnung zur Seitenfläche einen wenigstens abschnittweise kleineren Durchmesser als der maximale Durchmesser des Kabelkanalabschnitts und eines darin zu installierenden Kabels oder Kabelschutzschlauchs aufweist. Dadurch kann verhindert werden, dass ein im Kabelkanalabschnitt liegendes Kabel oder liegender Kabelschutzschlauch seitlich wieder aus diesem herausrutscht.

Bei der Verwendung mehrerer seitlich aneinander angrenzender Geräteträger mit an deren Seitenflächen angrenzenden Kabelkanalabschnitte können deren Kabelkanäle auch ineinander übergehen, wodurch etwa Kabelverbindungen zwischen den einzelnen Geräteträgern erzeugt werden können.

Ein Geräteträger mit mindestens einem an einer Seitenfläche angeordneten/oder und seitlich zugänglichen Kabelkanal kann auch als eigenes erfinderisches Konzept betrachtet werden, unabhängig von der weiteren Ausgestaltung des Trägers beispielsweise bezüglich dessen Befestigung auf einer Bauwerkoberfläche.

Eine Trägerplatte kann zudem über ein oder mehrere heraustrennbare Teilplatten verfügen, durch welche Plattenöffnungen unterschiedlicher Grössen und Formen erzeugt werden können. Ein weiterer Aspekt der Erfindung ist, dass ein Geräteträger eine Abdeckkappe aufweisen kann, die das mechanische Wirkverbindungsmittel im Bereich der Trägerschale oder Trägerplatte abdecken kann. Dadurch kann etwa eine ausreichende elektrische Isolation gewährleistet werden und nicht benötigte Öffnungen in der Trägerschale und/oder Trägerplatte können abgedeckt werden.

Das wärmedämmende Material kann ein Hartschaum aus Polyurethan (PUR) und/oder ein Hartschaum aus expandiertem Polystyrol (EPS) und/oder Hartschaum aus Polyethylenterephthalat (PET) und/oder Ortschaum aus PUR und/oder Glaswolle und/oder Steinwolle sein.

### KURZE ERLÄUTERUNGEN ZU DEN FIGUREN

Ausführungsformen der Erfindung werden anhand der nachfolgenden Figuren näher erläutert. Es zeigen:
- Fig. 1: eine Explosionsdarstellung einer ersten Ausführungsform eines Geräteträgers;
- Fig. 2: eine Explosionsdarstellung einer zweiten Ausführungsform eines Geräteträgers;
- Fig. 3: eine Explosionsdarstellung einer dritten Ausführungsform eines Geräteträgers;
- Fig. 4: eine Explosionsdarstellung einer vierten Ausführungsform eines Geräteträgers;
- Fig. 5: eine Explosionsdarstellung einer fünften Ausführungsform eines Geräteträgers;
- Fig. 6: Detail A gemäss Figur 5;
- Fig. 7: eine Explosionsdarstellung einer sechsten Ausführungsform eines Geräteträgers;
- Fig. 8: eine Explosionsdarstellung einer siebten Ausführungsform eines Geräteträgers;
- Fig. 9: eine Explosionsdarstellung einer achten Ausführungsform eines Geräteträgers;
- Fig. 10: ein Geräteträger in einer neunten Ausführungsform;
- Fig. 11: eine Explosionsdarstellung des Geräteträger aus Figur 10;
- Fig. 12: eine Ausführungsform eines erfindungsgemässen Distanzelements mit Solltrennstellen;
- Fig. 13: eine Explosionsdarstellung des Distanzelements aus Figur 12;
- Fig. 14: eine Geräteträger in einer zehnten Ausführungsform;
- Fig. 15: eine Explosionsdarstellung des Geräteträgers aus Figur 14;
- Fig. 16: eine Ausführungsform eines erfindungsgemässen Distanzelements mit Solltrennstellen;
- Fig. 17: eine weitere Ansicht des Distanzelements aus Figur 16;
- Fig. 18: eine Ausführungsform eines erfindungsgemässen Grundelements;
- Fig. 19: eine weitere Ausführungsform des Grundelements aus Figur 18;
- Fig. 20: eine Ausführungsform einer erfindungsgemässen Trägerschale;
- Fig. 21: Detail A aus Figur 20;
- Fig. 22: eine erfindungsgemässe Abdeckkappe.
- Fig. 23: eine Explosionsdarstellung einer erfindungsgemässen Trägerschale und Trägerplatte;
- Fig. 24: eine erfindungsgemässe Trägerplatte;
- Fig. 25: eine erfindungsgemässe Trägerplatte;

### WEGE ZUR AUSFÜHRUNG DER ERFINDUNG

In den nachfolgenden Figuren und der dazugehörigen Beschreibung sind gleiche oder gleich wirkende Teile mit den gleichen Bezugszeichen versehen.

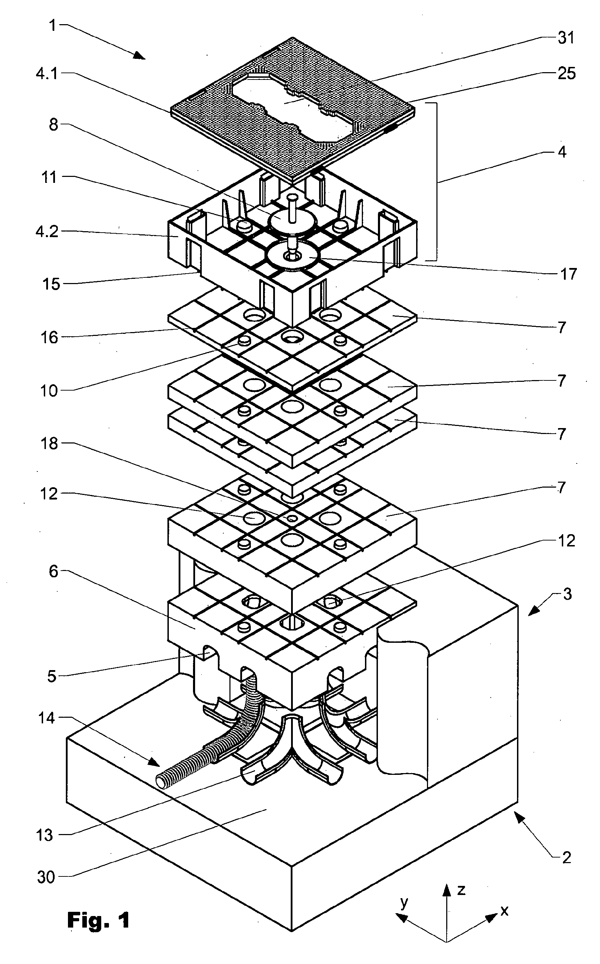

**Figur 1** zeigt schematisch eine Ausführungsform eines erfindungsgemässen Geräteträgers 1 in perspektivischer Ansicht von schräg vorne und oben. Ein Haltemittel 4, umfasst hier eine Trägerplatte 4.1 und eine Trägerschale 4.2, wobei die Trägerschale 4.2 eine Verstärkungsstruktur 15 in Form von Rippen zur Erhöhung ihrer strukturellen Steifigkeit aufweist. Die Trägerplatte 4.1 weist ein Raster von Befestigungslöchern 25 z.B. zur Befestigung von Geräten (nicht näher dargestellt) auf. In der Trägerplatte 4.1 sind ebenfalls optional eine oder mehrere Plattenöffnungen 31 vorhanden, durch welche beispielsweise elektrische Leitungen oder ein Teil eines gehaltenen Geräts geführt werden können. Diese Öffnungen 31 sind entweder vorgefertigt oder sie werden vor Ort bei der Montage des Geräteträgers 1 oder bei der Installation eines Geräts beispielsweise in die Trägerplatte 4.1 herausgebohrt, herausgeschnitten oder herausgebrochen. Mehrere (hier vier) aus einem isolierenden Hartschaum gefertigte, scheibenförmige Distanzelemente 7 unterschiedlicher Dicke überbrücken die Distanz zwischen dem Haltemittel 4 und einer Oberfläche 30 eines Bauwerks 2. Die Distanzelemente 7 weisen einen quadratischen Grundriss auf und verfügen in der gezeigten Ausführungsform auf ihrer Oberfläche ein System von Nuten 16 zur Aufnahme der Verstärkungsstruktur 15. Optional können die Distanzelemente 7 auch über Aushöhlungen verfügen, die beispielsweise zur Senkung der Materialkosten oder Senkung der Wärmeleitung mit Luft oder einem anderen Dämmmaterial gefüllt sein können. Wie in Figur 1 zu erkennen ist, sind die Distanzelemente hinter dem Haltemittel 4 angeordnet. Bei Bedarf können die Distanzelemente 7 das Haltemittel 4 zumindest bereichsweise seitlich umschliessen (vgl. nachfolgende Figuren).

Die Trägerschale 4.2 und die Distanzelemente 7 verfügen über miteinander korrespondierende Zentriermittel 10, 11, die hier aus vier Zapfen 10 und entsprechend ausgebildeten Löchern 11 bestehen. Zudem weisen die Distanzelemente in der dargestellten Ausführungsform je vier Öffnungen 12 in Form von Bohrungen, auf, die beim montierten Geräteträger vier Kabelkanäle ausbilden, die bei Bedarf zur Aufnahme von Kabeln dienen. Mittels eines Verankerungselements 8, hier in Form eines Schlagdübels, wird der Geräteträger 1 in einer in der Figur nicht sichtbaren Bohrung an der Oberfläche 30 des Bauwerks 2 verankert. Durch Verwendung eines Schlagdübels mit Kunststoffdorn kann die Wärmeleitung zwischen Bauwerkoberfläche 2 und Haltemittel 4 minimiert werden.

Der Schlagdübel 8 liegt in der Trägerschale 4.2 auf einer Zentrierschulter 17 auf und durchdringt die Distanzelemente 7 in einer hier zentral angeordneten Bohrung 18. Ein mit dem Bauwerk 2 in direktem Kontakt stehendes Grundelement 6 ist mit Vorteil zumindest bereichsweise aus einem wärmedämmendem Material gefertigt und weist in der gezeigten Ausführungsform acht seitliche Ausnehmungen 5 welche in vier in der gezeigten Darstellung vom untersten Distanzelement 7 verdeckte Kabelkanalabschnitte 12 münden. Selbstverständlich ist auch eine andere Anzahl von seitlichen Ausnehmungen, in Verbindung mit einer anderen Anzahl von Kabelkanalabschnitten möglich. Im Grundelement 6 befindet sich zudem ein aus einem Material höherer Festigkeit gefertigtes Führungselement 13, welches der Umlenkung von Kabeln oder Kabelschutzschläuchen 14 zwischen den seitlichen Ausnehmungen 5 und dem aus den Öffnungen 12 gebildeten Kabelkanälen dient. Das Führungselement 13 besteht hier aus Kunststoff und ist halbschalenförmig ausgebildet, so dass seitlich eingeführte Kabel in Richtung des Haltemittels umgelenkt werden, bzw. vom Haltemittel her eingeführte Kabel in Richtung der seitlichen Ausnehmungen umgelenkt werden. Es wird von hinten her in eine entsprechend ausgestaltete Ausnehmung im Grundelement 6 eingesetzt. Das Grundprinzip der nachfolgenden Ausführungsformen ist ähnlich zur Ausführungsform gemäss Figur 1.

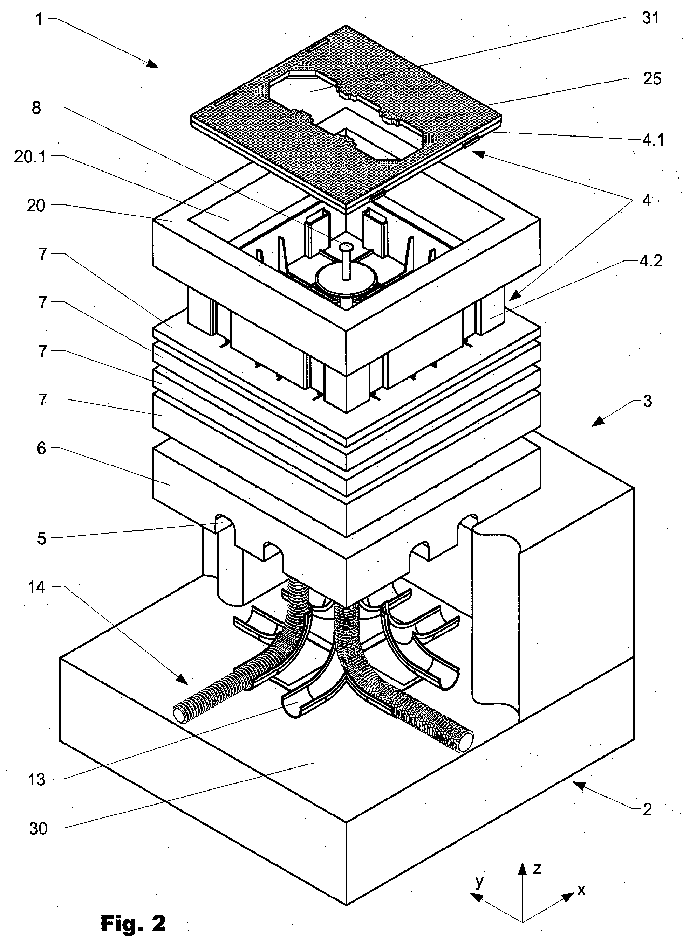

Figur 2 zeigt schematisch ein Geräteträger 1 zur Befestigung an einer Bauwerkoberfläche 30 mit darüber liegender Baudämmschicht 3, welcher über einen aus einem Hartschaum gefertigten Dämmrahmen 20 verfügt. Die Verwendung des Dämmrahmens 20 mit einer auf ein Haltemittel 4 abgestimmten Rahmenöffnung 20.1 ermöglicht die Anpassung eines Geräteträger 1 auf verschiedenartige Haltemittel bei Beibehaltung der übrigen Geräteträgerelemente. Das rechteckige Haltemittel in Figur 2 besteht aus einer rechteckigen Trägerplatte 4.1 und einer rechteckigen Trägerschale 4.2, die beide über eine kleinere Grundfläche als die daran angrenzenden Distanzelemente 7 verfügen. Die Trägerplatte 4.1 weist wiederum ein Raster von Befestigungslöchern 25 auf, die zur Verankerung von einem oder mehreren gleichen oder unterschiedlichen Geräten in unterschiedlichen Positionen dienen. Ebenso ist in der Trägerplatte 4.1 wiederum eine Öffnungen 30 vorhanden. Das rechteckige Haltemittel 4 wird in der rechteckigen Rahmenöffnung 20.1 des Dämmrahmens 20 aufgenommen und von diesem zumindest bereichsweise umschlossen. Der Dämmrahmen 20 wird mittels Formschluss und/oder Kraftschluss vom Haltemittel 4 gehalten. Der gezeigte Geräteträger 1 umfasst zudem vier Distanzelemente 7 mit drei unterschiedlichen Dicken, sowie ein Grundelement 6, mit einem Führungselement 13. Zur Verankerung in der Bauwerkoberfläche 2 wird wie in **Figur 1** wiederum ein Schlagdübel 8 verwendet. Das Führungselement weist optional zusätzlich ein Mittel zur lösbaren Halterung des eingeführten Schlagdübels 8 auf, welches in der Art eines in der Figur nicht sichtbaren selbstsperrenden Sicherungsrings gestaltet ist.

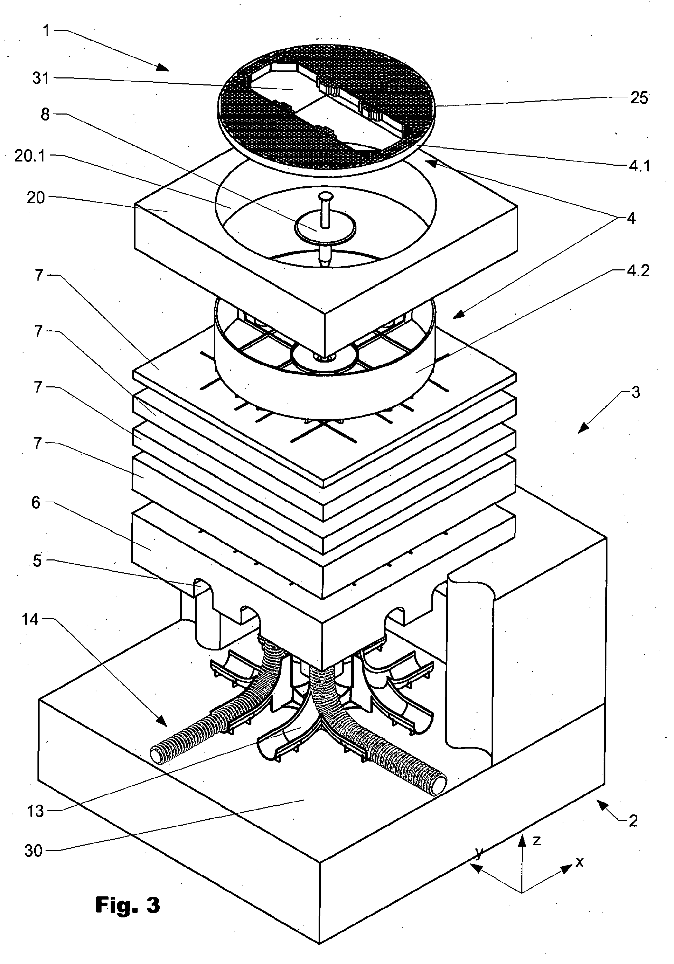

**Figur 3** zeigt schematisch einen Geräteträger 1 zur Befestigung an einer Bauwerkoberfläche 30 mit Baudämmschicht 3, der analog zur in **Figur 2** gezeigten Ausführungsform über einen das Haltemittel 4 aussen umschliessenden Dämmrahmen 20 verfügt. Im Unterschied zur in **Figur 2** gezeigten Ausführungsform verfügt dieser Geräteträger über ein rundes Haltemittel 4, das in einer entsprechenden runden Rahmenöffnung 20.1 im Dämmrahmen 20 aufgenommen wird. Damit besteht hier die Möglichkeit die Trägerplatte 4.1 um die Achse des im Zentrum angeordneten Verankerungselementes 8 zu drehen und damit die Position bedarfsgemäss einzustellen. Die Trägerplatte 4.1 enthält wiederum eine Öffnung 31, durch die elektrische Leitungen oder Teile gehaltener Geräte geführt werden können.

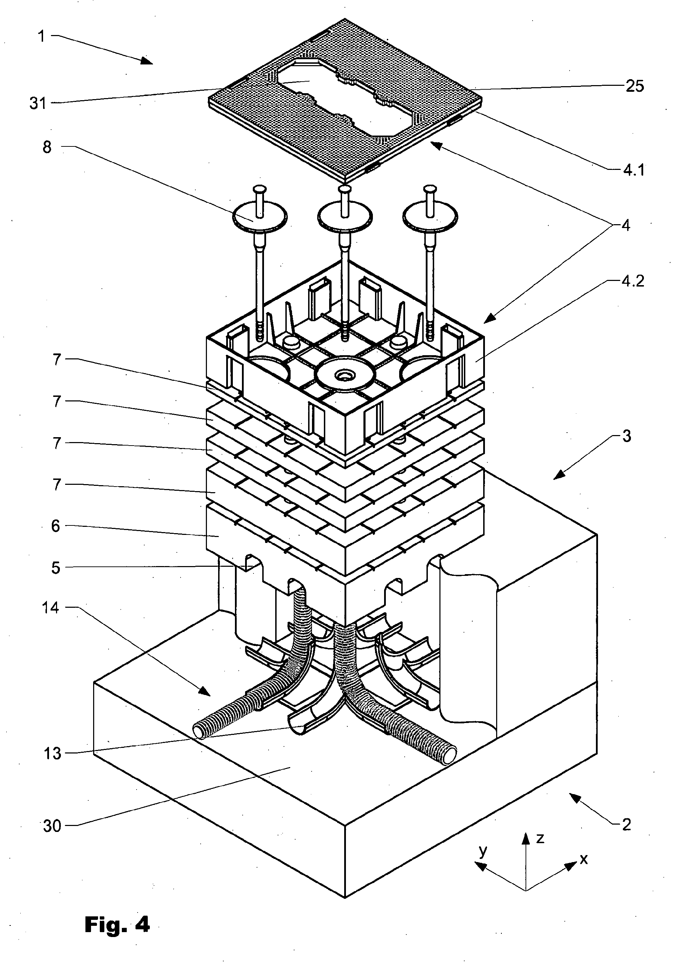

**Figur 4** zeigt schematisch einen Geräteträger 1 zur Befestigung an einer zu isolierenden Bauwerksoberfläche 30. Diese erfindungsgemässe Ausführungsform eines Geräteträgers ist für das Anbringen von besonders hohen Lasten am Haltemittel geeignet. Die Verankerung des Geräteträgers an der Bauwerkoberfläche 30 erfolgt deshalb durch drei Schlagdübel 8, die in der Trägerschale 4.2 aufgenommen werden und in der Bauwerkoberfläche 2 verankert werden.

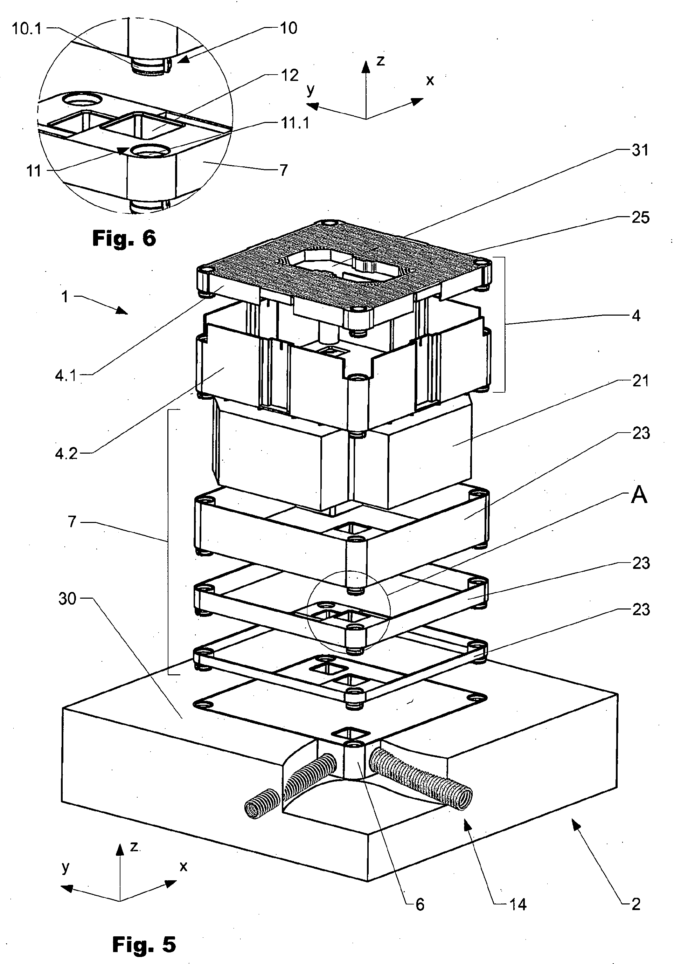

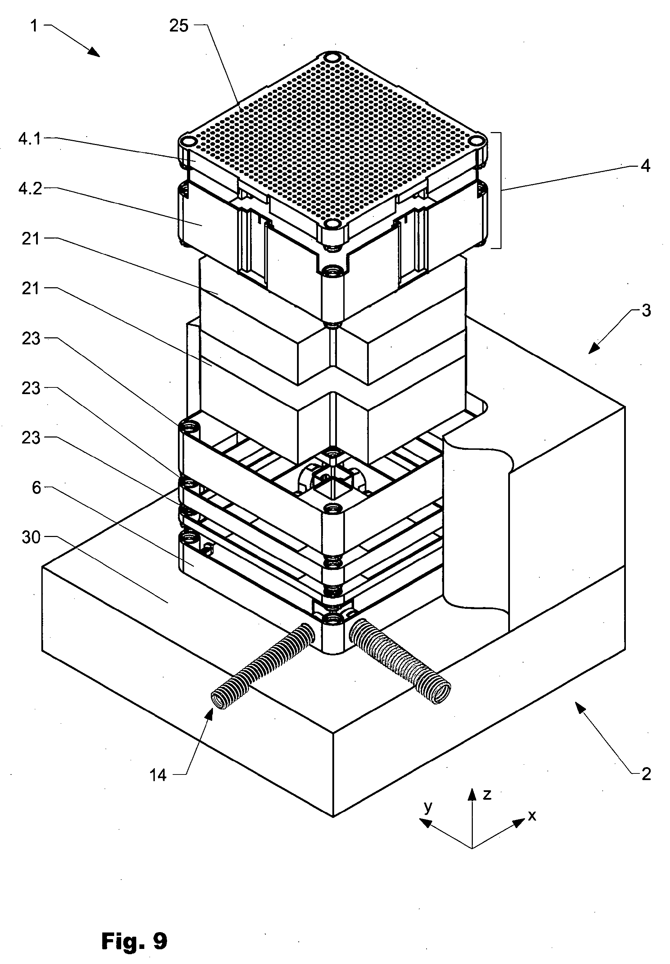

Wie in **Figur 5** schematisch gezeigt wird kann bei einem erfindungsgemässen Geräteträger 1 ein Grundelement 6 auch verloren im Bauwerk 2 im Bereich der Bauwerkoberfläche 30 montiert werden. Diese Art der Montage kann insbesondere im Bereich des Betonbaus zur Anwendung kommen. Damit der Anschluss der Kabelschutzschläuche 14 am Grundelement 6 sichtbar wird, wurde in der Darstellung ein Teil des eigentlich vorhandenen Bauwerks 2 im Bereich der Bauwerkoberfläche 30 weggeschnitten. Ebenso wurde die eigentlich vorhandene Baudämmschicht zur Erhöhung der Übersichtlichkeit weggelassen. Der Anschluss eines erfindungsgemässen Geräteträgers 1 an die Baudämmschicht 3 erfolgt gleich wie in **Figur 9** dargestellt. Zur Montage des in **Figur 5** gezeigten Geräteträgers kann ein Grundelements 6 vor dem Betonieren an einer Schalung befestigt werden z.B. mittels Nägeln oder Schrauben und mit Kabelschutzschläuchen oder -rohren verbunden werden. Der in **Figur 5** gezeigte erfindungsgemässe Gerätehalter umfasst Distanzelemente 7 welche aus drei festen äusseren Rahmenstrukturen 23 dreier unterschiedlicher Höhen und einem einzigen inneren Dämmkern aus weichem Material 21 z.B. Glaswolle oder Steinwolle bestehen. Die mechanische Wirkverbindung zwischen dem aus einer Trägerplatte 4.1 und einer Trageschale 4.2 bestehenden Haltemittel 4 wird über an den Zentriermitteln 10 und 11 angeordnete federnde umlaufende Wulste 10.1 und damit korrespondierenden Schnapprillen 11.1 erreicht, wie in **Figur 6** ersichtlich ist. Die festen äusseren Rahmenstrukturen 23 weisen zudem Kabelkanalabschnitte 12 zur Bildung von Kabelkanälen zwischen dem Grundelement 6 und der Trägerschale 4.2 auf.

**Figur 9** zeigt schematisch eine weitere Ausführungsform eines Geräteträgers 1 mit thermischer Dämmung aus weichem Material. Im Gegensatz zu der in **Figur 5** dargestellten Ausführungsform werden jedoch zwei Dämmkerne aus weichem Material 21 statt nur ein solcher verwendet. Ebenso wird das Grundelement 6 nicht wie in **Figur 6** in die Bauwerkoberfläche 2 eingegossen sondern auf dieser befestigt. Die Befestigung kann beispielsweise durch Anschrauben erfolgen. Die Trägerplatte 4.1 weist wiederum gerasterte Befestigungslöcher 25 auf, verfügt jedoch in der gezeigten Ausführungsform über keine vorbereitete Plattenöffnung.

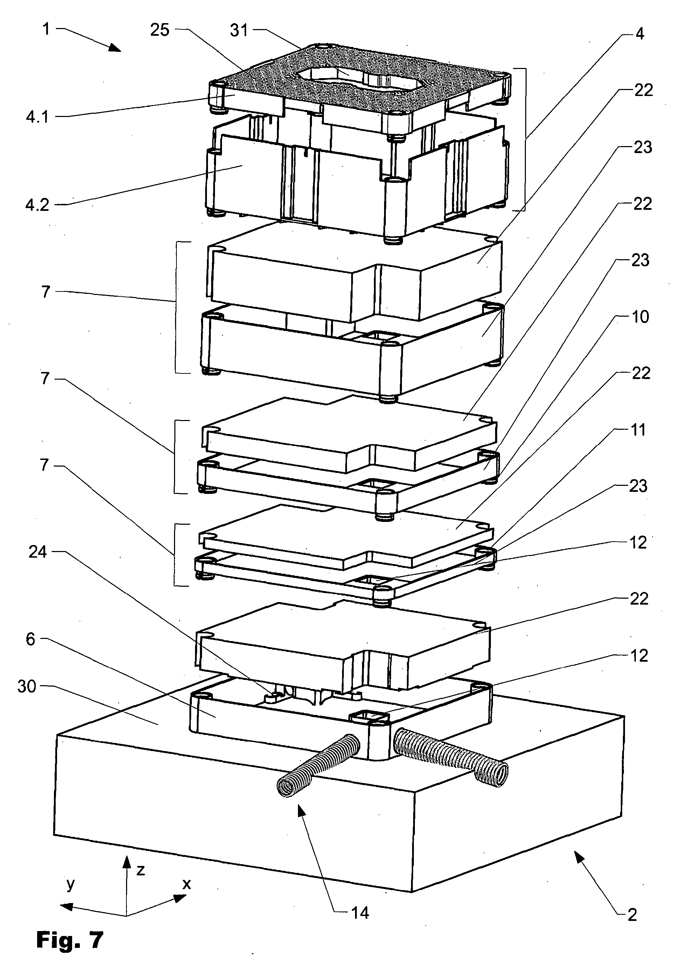

**Figur 7** zeigt schematisch eine weitere erfindungsgemässe Ausführungsform eines Geräteträgers 1. Die eigentlich vorhandene Baudämmschicht 3 wurde bei dieser Darstellung zur Erhöhung der Übersichtlichkeit wiederum weggelassen. Das Grundelement 6 kann beispielsweise mit an Befestigungsstellen 24 verankerten Schrauben an der Bauwerkoberfläche 30 festgeschraubt werden. Kabelschutzschläuche 14 können wiederum seitlich eingebracht werden. Die dargestellte Ausführungsform enthält drei Distanzelemente 7 dreier unterschiedlicher Dicken, umfassend jeweils eine feste äussere Rahmenstruktur 23 sowie einen Dämmkern aus festem Material 22 mit derselben Höhe wie die zugehörige feste äussere Rahmenstruktur 23. Ein Dämmkern aus festem Material 22 kann beispielsweise aus expandiertem Polystyrol gefertigt sein. Das Grundelement verfügt ebenfalls über einen Dämmkern aus festem Material 22.

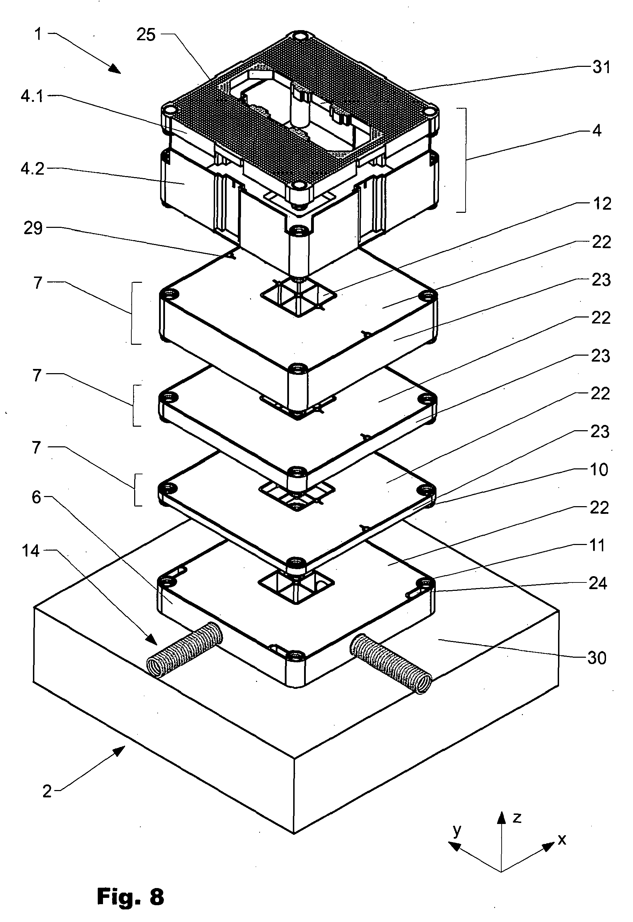

**Figur 8** zeigt schematisch eine erfindungsgemässe Ausführungsform eines Geräteträgers 1, bei welchem das Grundelement an der Bauwerkoberfläche 30 an mehreren Befestigungsstellen 24 festgeschraubt wird und an das Grundelement Kabelschutzschläuche 14 oder -rohre angeschlossen werden. Die eigentlich vorhandene Baudämmschicht wurde bei dieser Darstellung zur Erhöhung der Übersichtlichkeit wiederum weggelassen. Der Geräteträger 1 umfasst drei Distanzelemente 7 mit drei unterschiedlichen Höhen, die jeweils aus einer festen äusseren Rahmenstruktur 23 und einem Dämmkern aus festem Material 22 bestehen. Die feste äussere Rahmenstruktur 23 und der Dämmkern aus festem Material sind dabei jeweils form- und/oder reibschlüssig miteinander verbunden. Dies kann mittels an der festen äusseren Rahmenstruktur 23 angebrachten Klingen oder Rippen 29 erreicht werden. In der in **Figur 8** dargestellten erfindungsgemässen Ausführungsform eines Geräteträgers befinden sich an zentraler Lage der Distanzelemente jeweils aus vier Einzelsegmenten bestehende Kabelkanalabschnitte 12, die beim montierten Geräteträger einen viergeteilten Kabelkanal zwischen Grundelement 6 und Haltemittel 4 bilden.

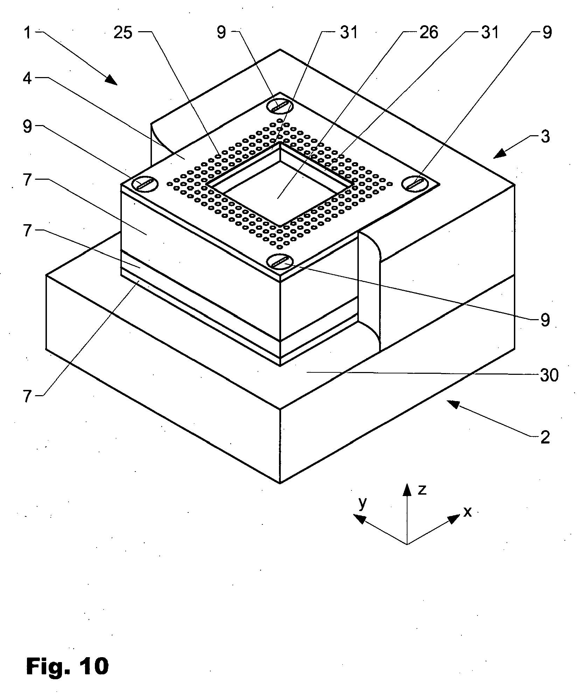

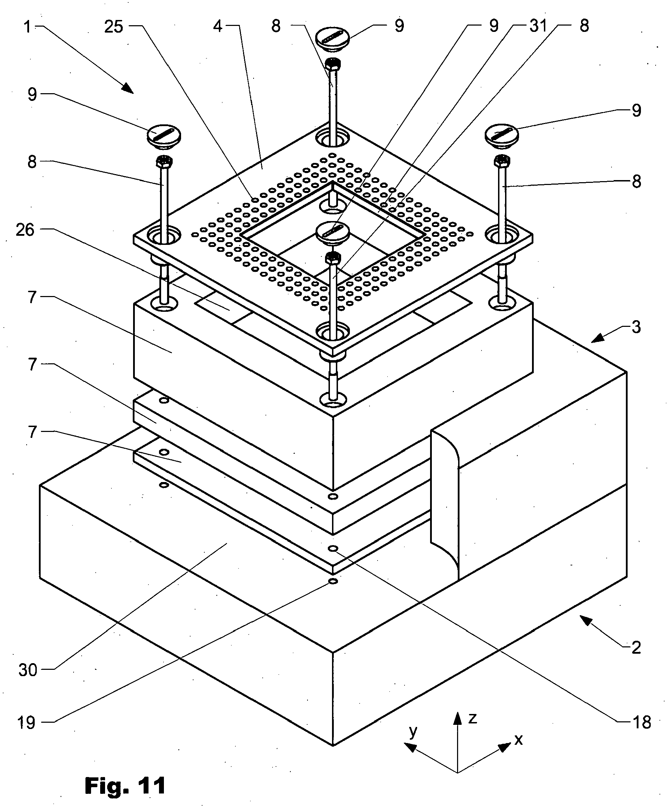

**Figur 10** und **Figur 11** zeigen schematisch eine Ausführungsform eines erfindungsgemässen Geräteträgers 1 in perspektivischer Ansicht, wobei **Figur 11** eine Explosionsdarstellung des in **Figur 10** gezeigten Geräteträgers darstellt. Ein Haltemittel 4, in Form einer Trägerplatte, wird mittels vier Verankerungselementen 8 an der Oberfläche 30 eines Bauwerks 2 befestigt. Durch diese erfindungsgemässen direkten Lastpfade vom Haltemittel 4 zum Bauwerk 2 kann eine feste und steife Befestigung eines Geräts auf einfache und kostengünstige Weise erreicht werden. Die Trägerplatte weist ein gerastertes Bohrmuster 25 zur verbesserten Positionierung und Verankerung von angebrachten Geräten auf. Mittels wärmedämmenden Distanzelementen 7 wird die Höhe des Geräteträgers jener der daran anschliessenden Baudämmschicht 3 angeglichen. Die Verankerungselemente werden mittels Abdeckkappen 9 verblendet. Um eine elektrische Leitung von der Bauwerkoberfläche zum Haltemittel zu führen kann ein Kabelkanal in die Distanzelemente geschnitten werden und darin optional ein Kabelschutzschlauch oder Kabelschutzrohr eingeführt werden. Das an das Haltemittel 4 angrenzende Distanzelement besteht aus einem äusseren Rahmen aus wärmedämmendem Hartschaum hoher Festigkeit und einem Kern aus wärmedämmendem Hartschaum geringerer Festigkeit. Aus diesem Grund kann mittels einfachen Hilfsmitteln (z.B. einer Messerklinge) vor Ort eine auf ein aufzunehmendes Gerät abgestimmte Ausnehmung 26 aus dem Distanzelement herausgearbeitet werden.

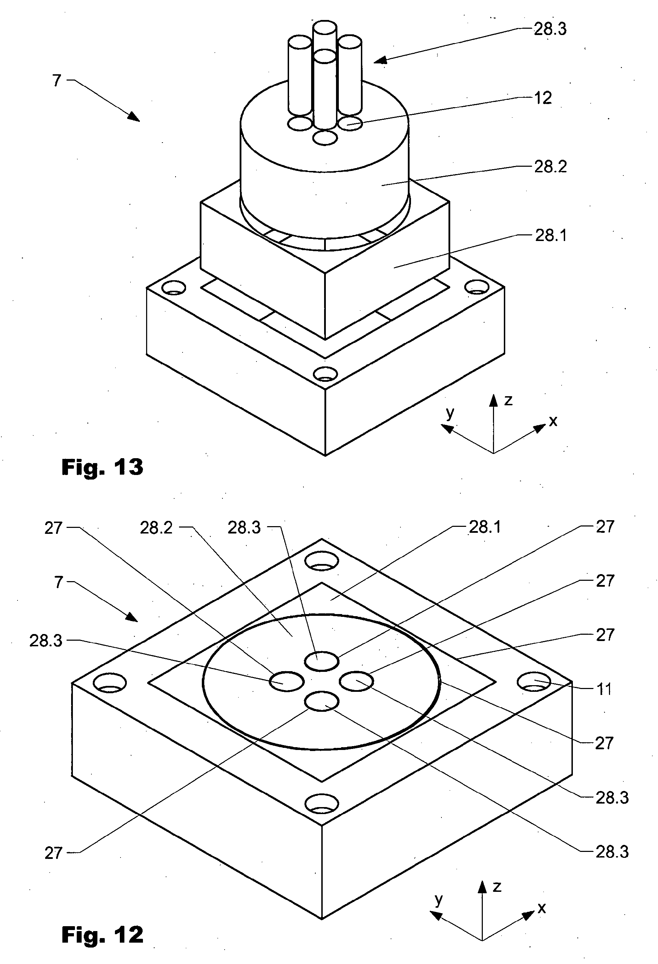

**Figur 12** zeigt schematisch eine Ausführungsform eines Distanzelements 7, das über Solltrennstellen 27 verfügt, welche ein Entfernen von Dämmmaterial an definierten Stellen erlauben, wie in **Figur 13** illustriert ist. Die Solltrennstellen können beispielsweise mittels Klingen in z-Richtung gestanzte Trenhflächen sein. Durch Heraustrennen von einem oder mehreren Kabelkanalkernen 28.3 können ein oder mehrere Kabelkanalabschnitte 12 erzeugt werden und das Bauteil anschliessend als normales Distanzelement 7 gebraucht werden. Mittels Heraustrennen eines grösseren runden Ausbruchstücks 28.2, gemeinsam mit den darin enthaltenen Kabelkanalkernen 28.3, kann im Distanzelement eine zylinderförmige Ausnehmung geschaffen werden, die etwa zur unmittelbaren Aufnahme eines zylinderförmigen Elektrogeräts geeignet ist. Ebenso kann ein solches Distanzelement als eine Art von Dämmrahmen zur Aufnahme einer runden Trägerschale, vergleichbar mit **Figur 3****,** eingesetzt werden. Mittels Heraustrennen des rechteckigen Ausbruchstücks 28.1, gemeinsam mit dem darin enthaltenen runden Ausbruchstücks 28.2 und den Kabelkanalkernen 28.3, kann im Distanzelement eine quaderförmige Ausnehmung geschaffen werden, die beispielsweise zur unmittelbaren Aufnahme eines quaderförmigen Elektrogeräts geeignet ist. Ebenso kann ein solches Distanzelement nach entfernen des rechteckigen Ausbruchstücks als eine Art von Dämmrahmen zur Aufnahme einer rechteckigen Trägerschale, vergleichbar mit **Figur 2****,** eingesetzt werden.

**Figur 14** und **Figur 15** zeigen schematisch eine weitere Ausführungsform eines erfindungsgemässen Geräteträgers 1 mit vier **(****Figur 14****)** und zwei **(****Figur 15****)** Distanzelementen 7. Bei einer solchen Ausführungsform gemäss der Erfindung befindet sich wenigstens eine einen Kabelkanal bildende Öffnung 12 angrenzend an eine Seitenfläche des Geräteträgers 1. Ein Kabelschutzschlauch 14 kann dadurch seitlich (x-Richtung bei der gezeigten Ausführungsform) in den Kabelkanal hinein- oder hinausgeschoben werden. Dies ermöglicht einen im Vergleich zum Stand der Technik bedeutend einfachere Montage eines Kabelschutzschlauches bei einem Geräteträger. Dieses Konzept eines seitlich angeordneten Kabelkanals kann auch losgelöst von den anderen Aspekten der Erfindung für andere Arten von Geräteträgern verwendet werden. Zum seitlichen Einführen eines Kabelschutzschlauchs (oder auch direkt eines Kabels) weisen die Öffnungen 12 seitliche Öffnungen 50 auf. Die Distanzelemente können wie gezeigt über Einbuchtungen 32 verfügen, welche einen besseren Zugang von Fingerkuppen zum Lösen von Rastzungen 34, welche die Trägerplatte 4.1 mit der Trägerschale 4.2 verbinden. Das Grundelement 6 weist in der gezeigten Ausführungsform seitliche Ausnehmungen 5 auf, durch welche beispielsweise ein Kabelschutzschlauch 4 in den durch die Öffnungen 12 gebildeten Kabelkanal geführt werden kann. In **Figur 15** ist in einer Explosionsdarstellung gezeigt, dass eine solche Ausführungsform eines Geräteträgers 1 über ein Verankerungselement 8 verfügt, das wie gezeigt ein Schlagdübel sein kann. Ein solcher Geräteträger kann eine Abdeckkappe aufweisen, die im montierten Zustand das Verankerungselement 8 und optional auch die zu den Kabelkanälen gerichteten Öffnungen in der Trägerschale 4.2 abdeckt (nicht explizit gezeigt). Die Abdeckkappe 9 kann zudem seitliche Flügel 44 aufweisen, die - wie in **Figur 14** gezeigt - im montierten Zustand der Abdeckkappe seitliche Öffnungen 49 der Trägerschale 4.2 verschliessen und dadurch unter anderem ein seitliches Herausgleiten eines im angrenzenden Kabelkanal liegenden Kabelschutzschlauchs 14 entgegenwirkt. Wie den **Figuren 14 und 15** gezeigt, kann das Grundelement 6 eines erfindungsgemässen Geräteträgers auch ohne Führungselement 13 ausgebildet sein. Durch die bei einer solchen Ausführungsform der Erfindung seitlich zugänglichen Kabelkanäle kann ein Kabelschlauch 14 beispielsweise erst im Grundelement positioniert und anschliessend von Hand parallel zum Kabelkanal (z-Richtung) gebogen werden und seitlich in diesen hinein geschoben werden.

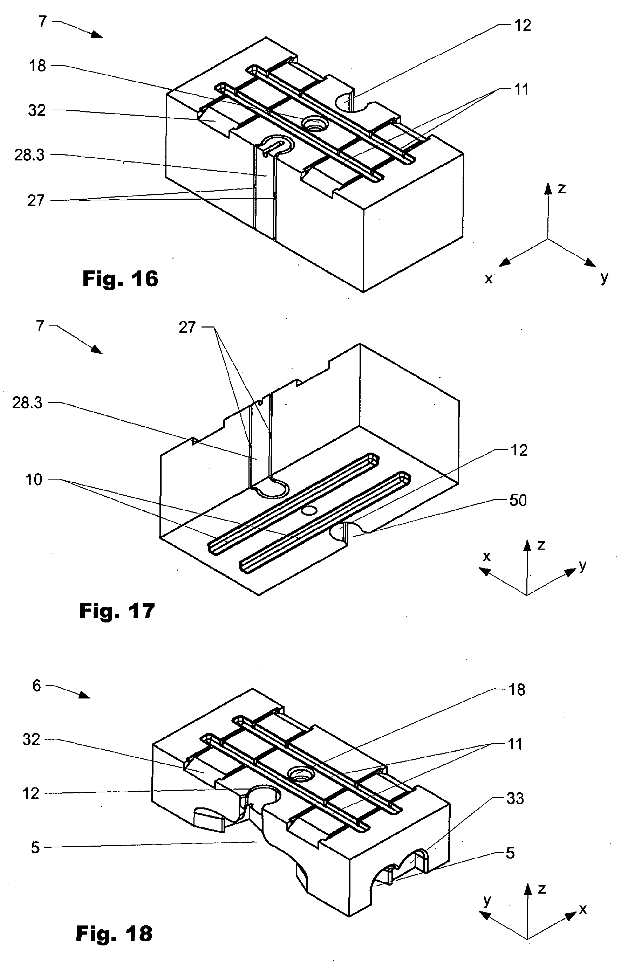

Wie in **Figur 14** gezeigt, besteht ein Aspekt der Erfindung darin, dass ein Geräteträger 1 Mittel 4.1 und/oder 4.2 zur Aufnahme und/oder Befestigung eines zu installierenden Geräts, sowie wenigstens ein Distanzelement 7 und Mittel 6 zur Anbringung auf einer Bauwerkoberfläche sowie ein an eine seitliche Oberfläche grenzendes Mittel zur Aufnahme eines Kabels oder Kabelschutzschlauchs, wie etwa ein Kabelkanal oder Kabelkanalabschnitt 12. Durch die seitliche Anordnung eines Kabelkanals wird eine im Vergleich zu den aus dem Stand der Technik bekannten Geräteträger bedeutend schnellere und einfachere Installation eines Kabelschutzschlauches ermöglicht. Die Montage verläuft in der Regel so, dass in einem ersten Schritt das Distanzelement direkt oder indirekt auf der Bauwerksoberfläche befestigt wird. In einem zweiten Schritt werden der Kabelschutzschlauch und/oder die Kabel in Kabelkanal, bzw. den Kabelkanalabschnitt 12 eingeführt. Vorher oder nachher wird die Trägerschale 4.2, bzw. die Trägerplatte 4.1 befestigt. Nach dem Einführen des Kabels oder Kabelschutzschlauchs kann der Kabelkanal seitlich offen zugänglich bleiben, oder auch wenigstens teilweise verschlossen. bzw. abgedeckt, werden. Eine solche Abdeckung kann beispielsweise durch eine Kappe erfolgen und/oder durch Klebeband und/oder mittels Klebstoff und/oder Montageschaum. In den **Figuren 16** und **17** ist eine Ausführungsform eines Distanzelements 7 mit einer seitlichen Öffnung 50, die als Kabelkanal dient. Das Distanzelement 6 weist eine zentrale Ankerbohrung 18 sowie Nut-förmige Löcher 11 und korrespondierende Zapfen 10 auf, die eine in x/y-Richtung ausgerichtete (zentrierte) Verbindung zu in z-Richtung angrenzenden anderen Distanzelementen und/oder einer Trägerschale und/oder einem Grundelement ermöglichen. Zudem verfügt das gezeigte Distanzelement 7 über einen heraustrennbaren Kabelkanalkern 28.3, der über eine Solltrennstelle 27 mit dem restlichen Distanzelement 7 verbunden ist. Wird der Kabelkanalkern 28.3 herausgebrochen, so entsteht eine zweite Öffnung, die als Kabelkanalabschnitt genutzt werden kann.

Wie beispielsweise in **Figur 17** gezeigt wird, kann ein an eine Seitenfläche angrenzender Kabelkanalabschnitt 12 beispielsweise ein im Wesentlichen kreisrunder oder elliptischer Querschnitt aufweisen, wobei die Öffnung 50 wenigstens abschnittweise kleiner als der Durchmesser des Kabelkanalabschnitts 12 sein kann. Ist die Öffnung 50 etwas kleiner (Untermass) als der Durchmesser eines eingeschobenen Kabelschutzschlauches, so kann dieser nur seitlich hinein- oder hinausgeschoben werden, wenn entweder die Öffnung 50 oder der Kabelschutzschlauch selber etwas deformiert werden, wodurch ein unbeabsichtigtes Rausrutschen eines eingelegten Kabelschutzschlauches verhindert werden kann. Ein Kabelkanalabschnitt 12 kann jedoch grundsätzlich auch Querschnitte anderer. Form und Grösse aufweisen, so sind beispielsweise auch rechtwinklige Formen denkbar. Ebenso ist denkbar, dass der Kabelkanal aus einer Reihe von Klammerelementen gebildet wird oder solche umfasst. Kabelkanäle solcher Ausgestaltungen sind sowohl für Distanzelemente, für Grundelemente aber auch allgemein für unterschiedliche Arten von Geräteträgern möglich.

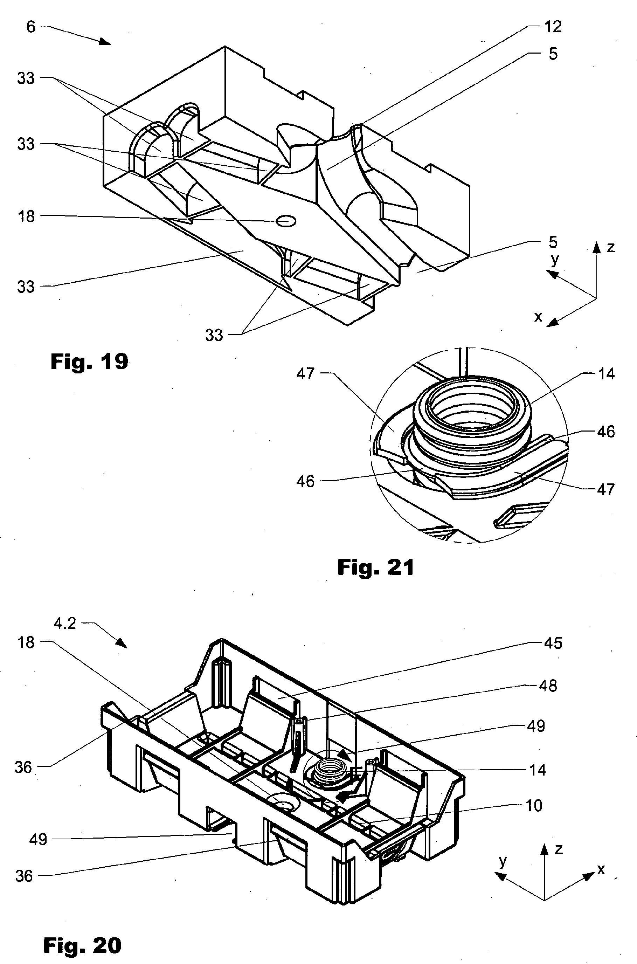

Wie in **Figuren 18** und **19** gezeigt, kann ein Grundelement 6, respektive ein als Grundelement ausgebildetes Distanzelement, eines Geräteträgers 1 über wenigstens eine seitliche Ausnehmung 5 verfügen, welche direkt in die, einen Kabelkanalabschnitt bildende, Öffnung 12 übergeht. Auf diese Weise kann etwa ein Kabelschutzschlauch seitlich in das Grundelement 6 hineingeführt und durch Biegung in Richtung der z-Achse umgelenkt werden. Ein Grundelement 6 kann jedoch auch über weitere, nicht direkt an die Öffnung 12 angrenzende seitliche Ausnehmungen 5 verfügen, durch welche beispielsweise ein Kabelschutzschlauch ebenfalls bis zur Öffnung 12 geführt werden können. Zudem ist es möglich in einem Grundelement zusätzliche seitliche Ausnehmungen 5 durch heraustrennbare Trennwände 33 zu verschliessen, die bei Bedarf einfach herausgelöst werden können, um beispielsweise zusätzliche Kabelschutzschläuche aufzunehmen. Vorhandene Trennwände 33 wirken hingegen der Entstehung von Wärmebrücken entgegen, indem sie eine unerwünschte Luftzirkulation im Geräteträger verhindern.

Wie in **Figur 20** gezeigt kann eine Trägerschale 4.2 über eine oder mehrere Aufnahmeöffnungen 49 verfügen, die z.B. wie gezeigt eine von der Seite (x-Achse) ein Einschieben eines Kabelschutzschlauchs 14 ermöglicht. Ebenso können ein oder mehrere Durchbrüche 45 zur Aufnahme von an Gegenelementen 36 angreifenden Rastzungen 34 zur Befestigung einer Trägerplatte vorhanden sein. Alternativ oder zusätzlich können auch Bohrungen 48 zur Befestigung einer Trägerplatte mittels Schrauben oder ähnlichem vorhanden sein. Wie in **Figur 21** gezeigt wird kann ein Kabelschutzschlauch 14 mittels einem, in die umfänglichen Rillen eingreifenden, kragenförmigen Element der Trägerschale 4.1 an dieser befestigt werden. Dabei ist es möglich, dass ein innerer 46 und ein äusserer Kragen 47 über Solltrennstellen von der Trägerschale gelöst werden können, wodurch zwischen die Rillen von Schutzschläuchen unterschiedlicher Durchmesser eingegriffen werden kann.

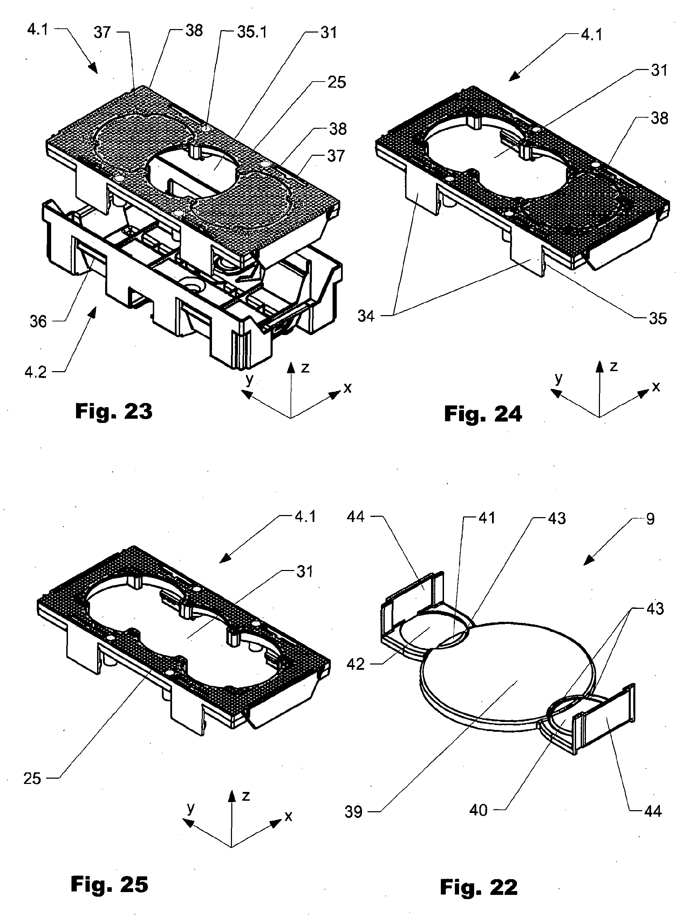

**Figur 22** zeigt eine weitere Ausführungsform einer Abdeckkappe 9 die bei einem Geräteträger zur Anwendung kommen kann. Die Abdeckkappe 9 kann eine Ankerkappe 39 aufweisen, welche im montierten Zustand ein Verankerungselement abdecken kann. Zudem kann sie auf einer oder mehreren Seiten heraustrennbare Kanalkappen 40 aufweisen, die im montierten Zustand der Abdeckkappe 9 die zur Bildung eines Kabelkanals dienenden Öffnungen in einer Trägerschale verdecken können. Nach dem Heraustrennen einer Kanalkappe 40 durch Zerstörung der daran anschliessenden Trennfuge 43 entsteht eine Kanalöffnung, durch die etwa ein Kabelschutzschlauch in die Trägerschale geführt werden kann. Durch das zusätzliche Heraustrennen eines Zwickels 41, kann die Kanalöffnung 42 vergrössert und ein Kabelschutzschlauch mit vergrössertem Durchmesser aufgenommen werden. Eine Abdeckkappe 9 kann zudem Flügel 44 aufweisen, die im montierten Zustand in den Aufnahmeöffnungen 49 einer Trägerschale 4.2 einrasten und diese verschliessen können. Eine Abdeckkappe 9 in der gezeigten Ausführungsform ermöglicht dadurch auch eine stabile Befestigung eines Kabelschutzschlauchs an einer Trägerschale.

Die **Figuren 23** bis **25** zeigen eine Ausführungsform einer Trägerplatte 4.1 die auch für einen Geräteträger 1 verwendet werden kann und welche die Aufnahme einer Vielzahl unterschiedlicher Geräte ermöglicht. Eine solche Trägerplatte 4.1 kann auch für andere Arten von Geräteträgern sowie unabhängig von Trägern, etwa in Verbindung mit Abzweigdosen, Einlasskasten, Brand- und Schallschutzdosen, Unterputzdosen und anderen etwa aus dem Stand der Technik bekannten Geräteschalen oder Dosen verwendet werden. Solche korrespondierende Dosen können auch seitliche angebrachte Flügelelemente aufweisen, mit welchen sie beispielsweise an z.B. im Betonbau verwendeten Armierungseisen befestigt werden können. Die Trägerplatte 4.1 kann mehrere Rastzungen 34 mit daran angebrachten Rastelementen 35 aufweisen, die eine Schnappverbindung mit bei den Durchbrüchen 45 der Trägerschale 4.2 angeordneten Gegenelementen 36 ermöglicht. Eine Trägerplatte 4.1 dieser Ausführungsform weist eine Plattenöffnung 31 sowie eine oder mehrere durch Zerstörung von Trennfugen 37 heraustrennbare Teilplatten 38 auf, wie in **Figur 23** gezeigt ist. Wie in **Figur 24** gezeigt kann die Plattenöffnung 31 durch heraustrennen einer Teilplatte 38 vergrössert werden, so dass beispielsweise eine Zweifachsteckdose aufgenommen werden kann. Wie in **Figur 25** gezeigt, kann durch Heraustrennen einer weiteren Teilplatte 38 die Plattenöffnung weiter vergrössert werden, so dass beispielsweise eine Dreifachsteckdose aufgenommen werden kann, oder auch eine andere Art von Geräte mit besonders grossen Aussenmassen. In einer Ausführungsform einer solchen Trägerplatte mit zwei heraustrennbaren Teilplatten weisen die beiden durch beim Heraustrennen der Teilplatten entstehenden seitlichen Öffnungen einen grösseren Durchmesser als die zentrale Öffnung auf. Dadurch können in diesen beiden Öffnungen zwei Geräte mit vergrösserten Aussenmassen montiert werden, wie zum Beispiel strahlvvasser-, spritzwasser-, und tropfwassergeschützte Steckdosen. Zur Montage solcher Geräte können auch zusätzliche Rahmen- oder Halteelemente auf der Trägerschale montiert werden.

**BEZUGSZEICHNENLISTE**

| | | | |
|---|---|---|---|
| 1 | Geräteträger | 18 | Ankerbohrung |
| 2 | Bauwerkoberfläche | 19 | Ankerstelle |
| 3 | Baudämmschicht | 20 | Dämmrahmen |
| 4 | Haltemittel (Aufnahmemittel) | 20.1 | Rahmenöffnung |
| 4.1 | Trägerplatte | 21 | Dämmkern aus weichem Material |
| 4.2 | Trägerschale | | |
| 5 | seitliche Ausnehmung | 22 | Dämmkern aus festem Material (formstabiler Dämmkern) |
| 6 | Grundelement | | |
| 7 | Distanzelement | | |
| 8 | Verankerungselement | 23 | Rahmenstruktur |
| 9 | Abdeckkappe | 24 | Befestigungsstelle |
| 10 | Zentrierzapfen | 25 | Befestigungslöcher (Rasterung) |
| 10.1 | umlaufender Wulst | | |
| 11 | Loch (Zentrierloch) | 26 | Ausnehmung |
| 11.1 | umlaufende Rille | 27 | Solltrennstelle |
| 12 | Öffnung (Kabelkanalabschnitt) | 28.1 | rechtwinkliges Ausbruchstück |
| 13 | Führungselement (Umlenkelement) | 28.2 | rundes Ausbruchstück |
| | | 28.3 | Kabelkanalkern |
| 14 | Kabelschutzschlauch | 29 | Rippe |
| 15 | Verstärkungsstruktur | 30 | Oberfläche (Bauwerk) |
| 16 | Nut-System | 31 | Plattenöffnung |
| 17 | Zentrierschulter | 32 | Einbuchtung |
| 33 | Trennwand | 42 | Kanalöffnung |
| 34 | Rastzunge | 43 | Trennfuge (der Kappe |
| 35 | Rastelement | 44 | Flügel (der Kappe) |
| 36 | Gegenelement | 45 | Durchbruch |
| 37 | Trennfuge (der Trägerplatte) | 46 | innerer Kragen |
| 38 | Teilplatte (heraustrennbar) | 47 | äusserer Kragen |
| 39 | Ankerkappe | 48 | Bohrung |
| 40 | Kanalkappe | 49 | Aufnahmeöffnung |
| 41 | Zwickel | 50 | Öffnung (seitlich) |

## Patentansprüche

1. Geräteträger (1) zur Befestigung von Geräten an einer mit Isolationsmaterial bedeckten Bauwerkoberfläche (30) umfassend ein Haltemittel (4) und wenigstens ein zwischen dem Haltemittel (4) und der Bauwerkoberfläche (30) liegendes Distanzelement (7), **dadurch gekennzeichnet, dass** das Haltemittel (4) durch wenigstens ein mechanisches Wirkverbindungsmittel (8) durch das Distanzelement (7) hindurch mit der zu isolierenden Bauwerkoberfläche (30) wirkverbunden wird und das Distanzelement (7) ein wärmedämmendes Material umfasst.

2. Geräteträger (1) nach Patentanspruch 1, **dadurch gekennzeichnet, dass** das Haltemittel (4) eine Trägerplatte (4.1) und/oder eine Trägerschale (4.2) umfasst.

3. Geräteträger (1) nach Patentanspruch 2, **dadurch gekennzeichnet, dass** dieser eine Trägerplatte (4.1) umfasst, die wenigstens eine heraustrennbare Teilplatte (38) aufweist, mittels derer eine Plattenöffnung (31) erzeugt oder vergrössert werden kann.

4. Geräteträger (1) nach Patentanspruch 3, **dadurch gekennzeichnet, dass** die Trägerplatte (4.1) zwei heraustrennbare Teile (38) aufweist.

5. Geräteträger (1) nach einem der vorangehenden Patentansprüche, **dadurch gekennzeichnet, dass** das wenigstens eine mechanische Wirkverbindungsmittel (8) ein.Ankerbolzen und/oder ein Reaktionsanker und/oder ein Schlagdübel und/oder eine Schraube und/oder ein Schnappverbinder ist.

6. Geräteträger (1) nach einem der vorangehenden Patentansprüche, **dadurch gekennzeichnet, dass** mindestens ein Distanzelement (7) zur mechanischen Kraftübertragung geeignete lasttragende (23) Strukturen aufweist.

7. Geräteträger (1) nach einem der vorangehenden Patentansprüche, **dadurch gekennzeichnet, dass** mindestens ein Distanzelement (7) über einen Kabelkanalabschnitt (12) verfügt.

8. Geräteträger (1) nach Patentanspruch 7, **dadurch gekennzeichnet, dass** der Kabelabschnitt (12) so angeordnet ist, dass er wenigstens auf einem Teilabschnitt über eine seitliche Öffnung (50) von einer Seitenfläche des Distanzelements (7) her zugänglich ist.

9. Geräteträger (1) nach einem der vorangehenden Patentansprüche, **dadurch gekennzeichnet, dass** das Haltemittel (4) und die Distanzelemente (7) über Zentriermittel (10, 11) verfügen, die im zusammengesetzten Zustand relative Verschiebungen und Rotationen zwischen dem Haltemittel (4) und den Distanzelementen (7) und/oder mehrerer Distanzelementen (7) zueinander verhindern.

10. Geräteträger (1) nach einem der vorangehenden Patentansprüche, **dadurch gekennzeichnet, dass** das wärmedämmende Material ein Hartschaum aus Polyurethan (PUR) und/oder ein Hartschaum aus expandiertem Polystyrol (EPS) und/oder Hartschaum aus Polyethylenterephthalat (PET) und/oder Ortschaum aus PUR und/oder Glaswolle und/oder Steinwolle ist.

11. Geräteträger (1) nach einem der vorangehenden Patentansprüche, **dadurch gekennzeichnet, dass** dieser über eine Abdeckkappe (9) verfügt, die das mechanische Wirkverbindungsmittel (8) abdecken kann.

12. Verfahren zur Montage eines Geräteträgers (1) auf einer zu isolierenden Bauwerkoberfläche (30), welches Verfahren folgende Verfahrensschritte umfasst:
a. Erstellen wenigstens einer Bohrung (19) in die Bauwerkoberfläche (30);
b. Bereitstellen eines Haltemittels (4), wenigstens eines Distanzelements (7) welches ein wärmedämmendes Material umfasst, und wenigstens eines Verankerungsmittels (8);
c. Erstellen eines Geräteträger-Stapels mittels Zusammenfügen des Haltemittels (4) und des wenigstens einen Distanzelements (7);
d. Erstellen einer mechanischen Wirkverbindung zwischen dem Stapel und der Bauwerkoberfläche (30).

13. Verfahren nach Patentanspruch 12, **dadurch gekennzeichnet, dass** wenigstens ein Distanzelement (7) ein wärmedämmender Hartschaum ist.

14. Verfahren nach Patentanspruch 12, **dadurch gekennzeichnet, dass** wenigstens ein Distanzelement einen wärmedämmenden Hartschaum und lasttragende Strukturen (23) umfasst.

## Claims

1. A device holder (1) for fastening devices to a building surface (30) covered with insulating material, comprising a holding means (4) and at least one spacer element (7) located between the holding means (4) and the building surface (30), **characterized in that** the holding means (4) is operatively connected by at least one mechanical operative connection means (8) through the spacer element (7) to the building surface (30) to be insulated, and the spacer element (7) comprises a heat insulating material.

2. The device holder (1) according to claim 1, **characterized in that** the holding means (4) comprises a support plate (4.1) and/or a support shell (4.2).

3. The device holder (1) according to claim 2, **characterized in that** it comprises a support plate (4.1) which has at least one detachable part-plate (38) by means of which a plate opening (31) can be produced or increased.

4. The device holder (1) according to claim 3, **characterized in that** the support plate (4.1) has two detachable parts (38).

5. The device holder (1) according to one of the preceding claims, **characterized in that** the at least one mechanical operative connection means (8) is an anchor bolt and/or a reaction anchor and/or an impact dowel and/or a screw and/or a snap connector.

6. The device holder (1) according to one of the preceding claims, **characterized in that** at least one spacer element (7) has suitable load-bearing structures (23) for mechanical force transmission.

7. The device holder (1) according to one of the preceding claims, **characterized in that** at least one spacer element (7) has a cable channel section (12).

8. The device holder (1) according to claim 7, **characterized in that** the cable section (12) is arranged so that at least on a part section it is accessible from one side surface of the spacer element (7) via a lateral opening (50).

9. The device holder (1) according to one of the preceding claims, **characterized in that** the holding means (4) and the spacer elements (7) have centering means (10, 11) which in the assembled state prevent relative displacements and rotations between the holding means (4) and the spacer elements (7) and/or a plurality of spacer elements (7) with respect to one another.

10. The device holder (1) according to one of the preceding claims, **characterized in that** the heat insulating material is a hard foam made of polyurethane (PUR) and/or a hard foam made of expanded polystyrene (EPS) and/or hard foam made of polyethylene terephthalate (PET) and/or in-situ foam made of PUR and/or glass wool and/or mineral wool.

11. The device holder (1) according to one of the preceding claims, **characterized in that** it has a covering cap (9) which can cover the mechanical operative connection means (8).

12. A method for fitting a device holder (1) on a building surface (30) to be insulated, which method comprises the following method steps:
a. production of at least one drilled hole (19) in the building surface (30);
b. provision of a retaining means (4), at least one spacer element (7) which comprises a heat insulating material, and at least one anchoring means (8);
c. production of a device holder stack by means of joining together the retaining means (4) and the at least one spacer element (7);
d. construction of a mechanical operative connection between the stack and the building surface (30).

13. The method according to claim 12, **characterized in that** at least one spacer element (7) is a heat insulating hard foam.

14. The method according to claim 12, **characterized in that** at least one spacer element comprises a heat insulating hard foam and comprises load-bearing structures (23).

## Revendications

1. Support d'appareils (1) pour la fixation d'appareils à une surface d'ouvrage de construction (30) recouverte d'un matériau isolant, comprenant un moyen de retenue (4) et au moins un élément d'espacement (7) situé entre le moyen de retenue (4) et la surface de l'ouvrage de construction (30), **caractérisé en ce que** le moyen de retenue (4) est en liaison fonctionnelle par au moins un moyen mécanique de liaison fonctionnelle (8) à travers l'élément d'espacement (7) avec la surface d'ouvrage de construction à isoler (30) et que l'élément d'espacement (7) comprend un matériau d'isolation thermique.

2. Support d'appareils (1) selon la revendication 1 du brevet, **caractérisé en ce que** le moyen de retenue (4) comprend une plaque support (4.1) et/ou une coque support (4.2).

3. Support d'appareils (1) selon la revendication 2 du brevet, **caractérisé en ce que** celui-ci comprend une plaque support (4.1) qui présente au moins une sous-plaque dissociable (38) au moyen de laquelle un orifice de plaque (31) peut être pratiqué ou agrandi.

4. Support d'appareils (1) selon la revendication 3 du brevet, **caractérisé en ce que** la plaque support (4.1) comprend deux pièces dissociables (38).

5. Support d'appareils (1) selon une des revendications précédentes du brevet, **caractérisé en ce que** l'au moins un moyen mécanique de liaison fonctionnelle (8) est un boulon d'encrage et/ou un ancrage à réaction et/ou une cheville à frapper et/ou une vis et/ou un connecteur à déclic.

6. Support d'appareils (1) selon une des revendications précédentes du brevet, **caractérisé en ce qu'**au moins un élément d'espacement (7) présente des structures porteuses de charge (23) adaptées au transfert mécanique de force.

7. Support d'appareils (1) selon une des revendications précédentes du brevet, **caractérisé en ce qu'**au moins un élément d'espacement (7) dispose d'une section de canal de câblage (1 2).

8. Support d'appareils (1) selon la revendication 7 du brevet, **caractérisé en ce que** la section de câblage (12) est disposée de manière à être accessible au moins sur une sous-section par une aperture latérale (50) depuis une surface latérale de l'élément d'espacement (7).

9. Support d'appareils (1) selon une des revendications précédentes du brevet, **caractérisé en ce que** le moyen de retenue (4) et les éléments d'espacement (7) disposent de moyens de centrage (10, 11) qui, à l'état assemblé, empêchent des déplacements et des rotations relatifs entre le moyen de retenue (4) et les éléments d'espacement (7) et/ou plusieurs éléments d'espacement (7) les uns par rapport aux autres.

10. Support d'appareils (1) selon une des revendications précédentes du brevet, **caractérisé en ce que** le matériau d'isolation thermique est une mousse dure de polyuréthane (PUR) et/ou une mousse dure de polystyrène expansé (EPS) et/ou une mousse dure de téréphtalate de polyéthylène (PET) et/ou une mousse statique à base de PUR et/ou de la laine de verre et/ou de la laine de roche.

11. Support d'appareils (1) selon une des revendications précédentes du brevet, **caractérisé en ce que** celui-ci dispose d'une calotte de recouvrement (9) qui peut recouvrir le moyen mécanique de liaison fonctionnelle (8).

12. Procédé de montage d'un support d'appareils (1) sur une surface d'ouvrage de construction à isoler (30), lequel procédé comprend les étapes opératoires suivantes :
a. création d'au moins un trou (19) dans la surface de l'ouvrage de construction (30) ;
b. mise à disposition d'un moyen de retenue (4), d'au moins un élément d'espacement (7) qui comprend un matériau d'isolation thermique et d'au moins un moyen d'ancrage (8) ;
c. création d'une pile support d'appareils par assemblage du moyen de retenue (4) et de l'au moins un élément d'espacement (7);
d. établissement d'une liaison fonctionnelle mécanique entre la pile et la surface de l'ouvrage de construction (30).

13. Procédé selon la revendication 12 du brevet, **caractérisé en ce qu'**au moins un élément d'espacement (7) est une mousse dure d'isolation thermique.

14. Procédé selon la revendication 12 du brevet, **caractérisé en ce qu'**au moins un élément d'espacement comprend une mouche dure d'isolation thermique et des structures porteuses de charge (23).
